Europäisches Patentamt

(19) European Patent Office

Office européen des brevets

(11) Numéro de publication: **0 272 966**
**B1**

(12) # FASCICULE DE BREVET EUROPEEN

(45) Date de publication du fascicule du brevet:
**18.04.90**

(21) Numéro de dépôt: **87402723.8**

(22) Date de dépôt: **02.12.87**

(51) Int. Cl.⁴: **F01D 5/06, F16B 35/04**

(54) Système de liaison des disques pour un rotor de turbomachine.

(30) Priorité: **03.12.86 FR 8616875**

(43) Date de publication de la demande:
**29.06.88 Bulletin 88/26**

(45) Mention de la délivrance du brevet:
**18.04.90 Bulletin 90/16**

(84) Etats contractants désignés:
**DE FR GB IT**

(56) Documents cités:
**FR-A- 683 867
FR-A- 1 056 070
FR-A- 1 242 604
FR-A- 2 367 943
GB-A- 642 287**

(73) Titulaire: **SOCIETE NATIONALE D'ETUDE ET DE
CONSTRUCTION DE MOTEURS D'AVIATION,
"S.N.E.C.M.A.", 2, boulevard du Général Martial Valin,
F-75015 Paris(FR)**

(72) Inventeur: **Naudet, Jacky, 9, place de la Remise
Bondoufle, F-91000 Evry(FR)**

(74) Mandataire: **Molnat, François et al, S.N.E.C.M.A. Service
des Brevets Boîte Postale 81, F-91003 Evry Cédex(FR)**

# Description

La présente invention concerne la fixation entre eux des différents éléments formant les tambours de rotors des compresseurs ou des turbines de turbomachines, et notamment de turboréacteurs d'aviation.

La liaison des rotors de compresseurs ou de turbines se fait habituellement par boulonnage de leurs brides respectives. Cet assemblage par boulons ou axes filetés ne pose pas de problème particulier lorsque l'accès est libre de part et d'autre des pièce à assembler. Les boulons ou axes filetés peuvent être positionnés de l'amont vers l'aval dans les orifices destinés à les recevoir et le blocage peut être réalisé soit en serrant à l'aide de clefs les écrous amont et aval, l'un vers l'autre dans le cas d'un assemblage par axes filetés, soit en positionnant les têtes des vis dans un dispositif anti-rotation et en serrant l'écrou aval dans le cas d'un assemblage par boulons. Des dispositifs de ce genre sont montrés dans le brevet GB 2 057 617, et le brevet FR 2 065 837.

De tels dispositifs ne sont toutefois pas utilisables dans le cas où le montage s'effectue sur des brides de disques très rapprochées du disque et où la cavité disponible entre le disque et la bride n'est pas d'une dimension suffisante pour glisser le boulon dans l'alésage de la bride.

Seuls des axes filetés peuvent être utilisés dans un tel cas. Das solutions de ce type sont montrées dans les documents US 3 447 822 et FRA.1056070. Toutefois la solution préconisée dans ces documents présente l'inconvénient de ne pas permettre un bon contrôle des serrages d'écrous. D'autre part, il est des cas où, les pièces une fois empilées, on ne peut plus accéder à la cavité amont et on ne peut donc plus serrer par les écrous aval et cette façon de procéder n'est pas satisfaisante car on ne peut plus contrôler si les écrous amont portent bien sur la bride à l'intérieur de la cavité amont et de plus, lors du serrage des écrous aval, les axes ont tendance à se dévisser des écrous amont.

Seul un contrôle dimensionnel de la longueur dépassant les axes en aval permet de savoir si l'ensemble est bien positionné et correctement serré. Cette solution n'est pas satisfaisante car, en cas de serrage incorrect, il est nécessaire de recommencer toute l'opération de mise en place de l'axe fileté.

La présente invention remédie à ces inconvénients et permet d'être certain du positionnement de l'ensemble et d'assurer un serrage correct sans aucun contrôle après montage.

L'invention a donc pour object un procédé d'assemblage de deux ou plusieurs disques ou brides de disques de rotors de turbomachine entre eux, au moyen d'axes de fixation comportant une partie centrale de section oblongue poursuivi à chacune de ses extrémités par une partie cylindrique lisse de diamètre plus faible que la plus petite dimension transversale de la partie centrale oblongue, les deux parties cylindriques lisses étant elles-mêmes terminées par deux extrémités filetées destinées à recevoir chacune un écrou de fixation de chacun des disques ou brides de disques à assembler.

Ainsi la face transversale de la partie centrale oblongue de chaque axe peut par appui contre l'une des brides à monter assurer le positionnement axial de l'axe tandis que la section oblongue de la partie centrale peut coopérer avec un alésage de section conjuguée, porté par une seconde bride pour assurer le positionnement angulaire de l'axe.

Selon le Procédé:

a) on met en place la première extrémité filetée de chaque axe dans un alésage circulaire de la première bride à assembler jusqu'à ce que la face transversale de la partie centrale oblongue soit au contact de la bride et on visse sans blocage un écrou sur la première extrémité filetée de chaque axe;

b) on présente sur la bride équipée de tous ses axes un outillage de positionnement angulaire des axes, ledit outillage étant constitué par un anneau comportant des alésages de section oblongue conjuguée, lesdites sections possédant toutes la même orientation radiale par rapport à l'axe de symétrie de l'anneau et on bloque les écrous sur les premières extrémités filetées;

c) on met en place une deuxième pièce, disque, virole ou bride de disque possédant des alésages à section oblongue en appui contre la première bride.

Le complément de description qui va suivre, accompagné à titre d'exemple de planches annexées permettra d'expliquer le montage des disques de rotors selon l'invention.

- la figure 1 annexée montre en demi-coupe axiale un rotor de compresseur haute pression de turbomachine dont les quatrième et cinquième étages sont assemblés selon l'invention;
- la figure 2 montre selon la même vue la bride du quatrième étage après positionnement de l'axe fileté;
- la figure 3 montre selon la même vue le positionnement et le serrage des axes filetés, et la figure 3a en montre en vue suivant F de la figure 3 les positions respectives des axes successifs;
- la figure 4 montre le rotor alors que une virole intermédiaire portant ici un accélérateur centripète est positionnée au moyen des axes;
- la figure 5 montre le serrage final de la virole aval sur la virole amont.

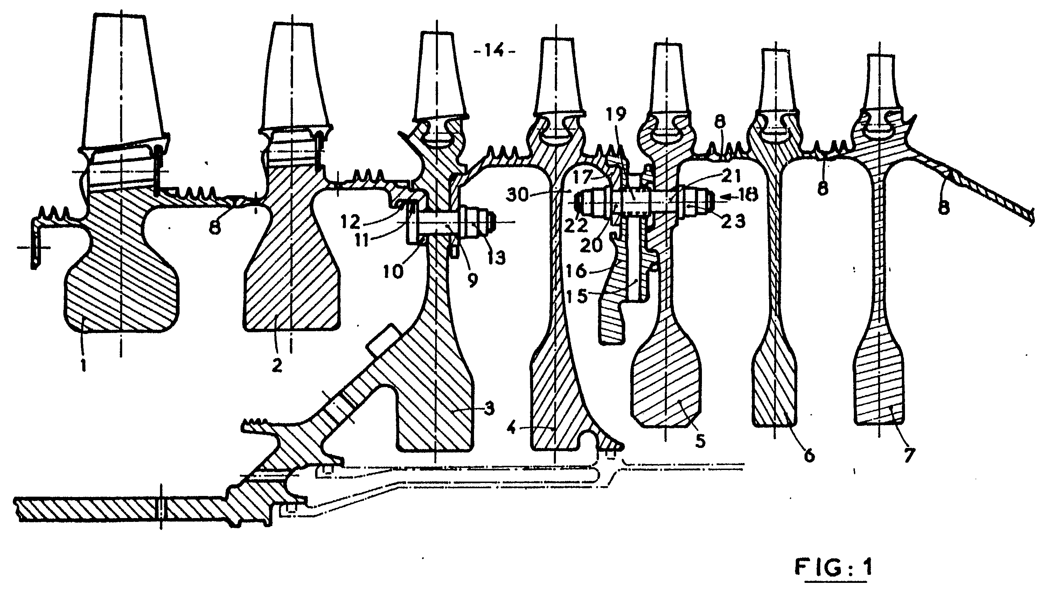

A la figure 1 est montrée la demi-coupe axiale d'un rotor de compresseur haute pression de turbomachine mais il est bien évident que l'invention s'applique également aux rotors de turbines de ces mêmes turbomachines.

Le rotor ici représenté comporte 7 étages de compression dont les disques 1 à 7 sont liés entre eux soit par soudage (ou brasage) en 8, soit par des liaisons par boulons ou axes filetés. Ainsi la bride aval du disque 2 et la bride amont du disque 4 sont assemblées sur le disque 3 au moyen de boulons 9 dont la vis est glissée de l'amont vers l'aval dans la bride aval 10 du disque 2, ce qui est possible du fait que l'espace disponible entre le disque 2 et sa bride aval 10 est suffisant pour introduire la vis et la mettre en place dans son logement.

Le positionnement angulaire de la vis peut être réalisé par un méplat 11 de la tête de vis 9 venant en appui contre la portée circulaire interne 12 de la bride 10. Une fois les disques 3 et 4 en place, il suffit alors de serrer l'écrou 13 pour que l'assemblage soit réalisé.

Il n'en est pas de même pour la fixation des disques 4 et 5. En effet, les étages 4 et 5 du compresseur HP sont plus rapprochés entre eux que les étages 3 et 4 et d'autre part, à cet endroit du compresseur est situé un prélèvement d'air dans la veine 14, l'air prélevé étant transmis par un accélérateur à conduits 15 centripètes vers l'intériéur du tambour du rotor pour aller refroidir les étages de turbine en aval.

Cet accélérateur centripète a, pour des raisons de facilité d'usinage, été réalisé sur une virole intermédiaire 16 que l'on vient loger entre les disques 4 et 5 et pour respecter l'écartement de ces deux disques, la bride aval 17 du disque 4 est très proche du disque qui la porte et de ce fait l'espace 30 entre disque et bride n'est pas suffisant pour permettre l'introduction d'une vis de l'amont vers l'aval. La bride 17 la virole 16 et le disque 5 sont donc assemblés au moyen d'axes filetés 18 comportant une partie centrale 19 de section oblongue prolongée à chacune de ses extrémités par une portée cylindrique 20,21 dont l'extrémité 22,23 est filetée.

Tous les axes 18 sont installés sur la bride 17 par l'aval et des écrous 24 sont vissés sur la partie filetée 22 mais les écrous 24 ne sont dans un premier temps pas bloqués. On présente alors un outillage 25 de calage angulaire des axes sur la bride.

Cet outillage 25 est constitué par un anneau comportant des orifices oblongs identiques à ceux qui sont usinés dans la virole intermédiaire 16.

L'outillage 25 comporte un bord axial cylindrique 26 à sa périphérie qui vient en appui sur la partie supérieure de la bride de façon à centrer l'outillage sur la bride et à permettre le calage angulaire des parties oblongues 19 au moyen d'une clef à fourche 27 mise en position par la partie inférieure de l'outillage.

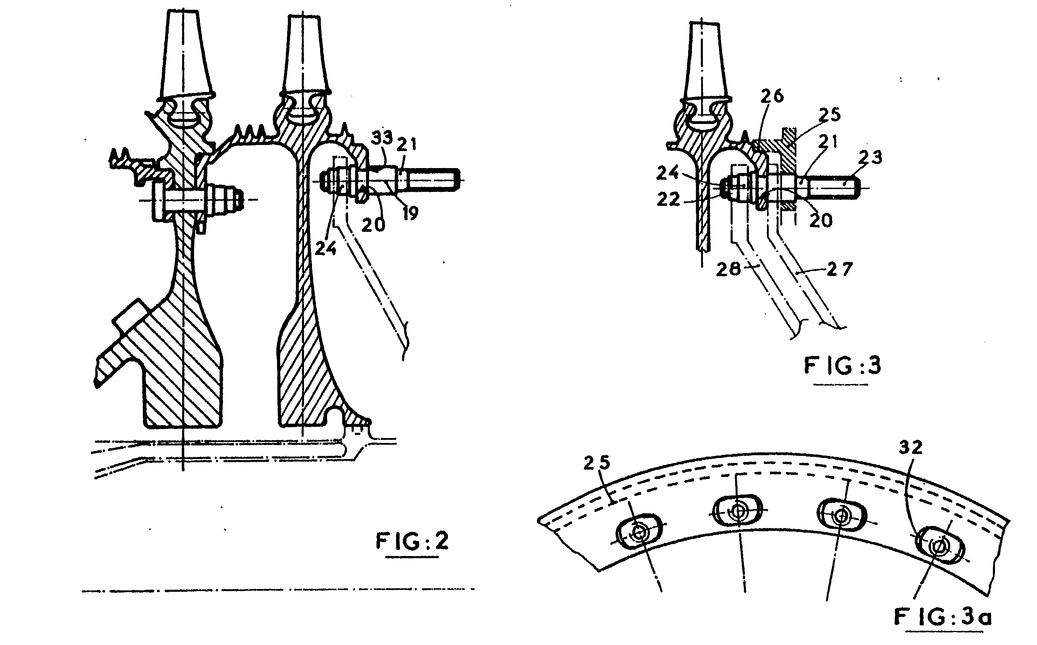

Le serrage des écrous 24 peut alors être réalisé, les parties oblongues 19 étant positionnées de façon identique pour chaque axe au moyen de l'outillage 25 (voir figure 3a) comportant des alésages 32 à section oblongue possédant tous la même orientation radiale et maintenues dans cette position par la clef 27 tandis que l'écrou est serré par une clef 28. L'extrémité 33 du corps central oblong 19 venant en appui axial contre la bride 17, l'axe fileté 18 a donc une position axiale déterminée et intangible.

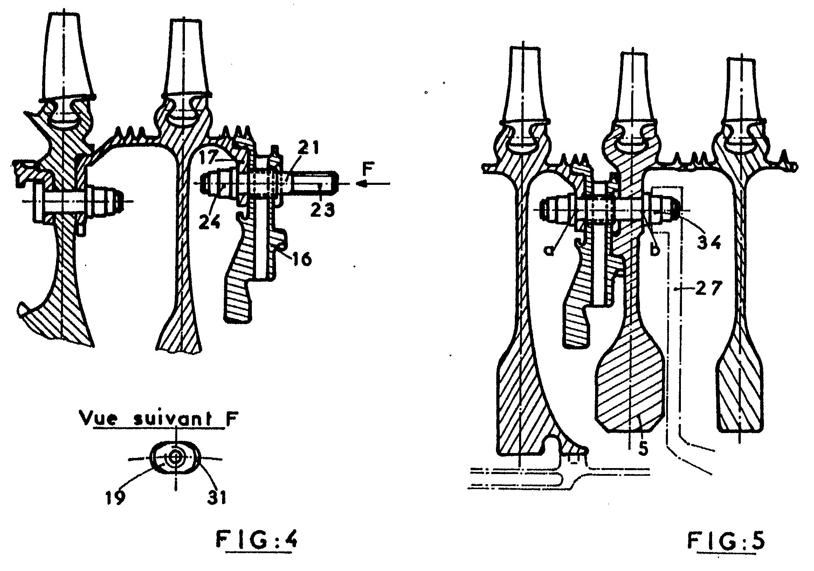

On peut alors retirer l'outillage 25 et mettre en position la virole intermédiaire 16 (figure 4) dont tous les alésages 31 ont la même section oblongue que celle des corps centraux 19 des axes 18.

On peut enfin positionner le disque 5 et serrer les écrous 34 sur la partie filetée aval 23 au moyen d'une clef 27 dynamométrique. La coopération du corps central 19 oblong avec un alésage de même section assure l'antirotation de l'axe fileté.

Un tel procédé de montage permet de s'assurer que le serrage des brides à bien lieu entre les faces "a" de la virole 17 et "b" du disque 5 et le positionnement de l'axe 18 est assuré tant en rotation qu'en position angulaire sans nécessiter de controle après montage.

Les axes filetés selon l'invention et leur procédé de montage s'appliquent donc bien dans le cas de disques de rotor de faible dimension pour lesquels, après montage des pièces en regard, une tête de vis amont n'est plus accessible par son maintien par une clef. Le procédé permet donc le montage en aveugle de telles pièces de rotors.

**Revendications**

1. Procédé de montage d'au moins deux disques ou brides de disque de rotor de turbomachine au moyen d'axes de fixation régulièrement répartis sur le pourtour du disque ou de la bride de disque, et aptes à permettre leur montage en aveugle sur une des brides, lesdits axes de fixation (18) comportant une partie centrale (19) de section oblongue suivie à chacune de ses extrémités par une partie cylindrique (20, 21) de diamètre plus faible que la plus petite dimension transversale de la partie centrale oblongue (19), les deux parties cylindriques lisses de chaque axe étant elles-même terminées par deux extrémités filetées (22, 23) destinées à recevoir chacune un écrou (24, 26) de fixation de chacun des disques ou brides de disques à assembler tandis que leur partie centrale oblongue (19) coopère avec un alésage (31) de section oblongue correspondante d'une des brides à assembler, pour assurer le positionnement angulaire de l'axe avant serrage, et que la première extrémité filetée (22) de l'axe traverse un alésage cylindrique de la première bride à assembler jusqu'à la mise en appui axial contre la première bride de la surface transversale délimitant la première extrémité (33) de la partie centrale oblongue de l'axe pour assurer le positionnement axial de l'axe sur la première bride, procédé caractérisé en ce que:

a) on met en place la première extrémité filetée (22) de chaque axe (18) dans un alésage circulaire de la première bride à assembler jusqu'à ce que la face transversale (33) de la partie centrale oblongue soit au contact de la bride et on visse sans blocage un écrou (24) sur la première extrémité filetée de chaque axe;

b) on présente sur la bride équipée de tous ses axes un outillage (25) de positionnement angulaire des axes, ledit outillage étant constitué par un anneau comportant des alésages (32) de section oblongue conjuguée, lesdites sections possédant toutes la même orientation radiale par rapport à l'axe de symétrie de l'anneau et on bloque les écrous (24) sur les premières extrémités filetées;

c) on met en place une deuxième pièce, disque, virole ou bride de disque possédant des alésages à section oblongue (31) en appui contre la première bride.

2. Procédé de montage d'au moins deux disques ou brides de disque selon la revendication 1, caractérisé en ce qu'on visse et on bloque des écrous (34) sur la seconde extrémité filetée (23) des axes de fixation.

3. Procédé selon l'une des revendications 1 ou 2 de montage de trois brides entre elles, la bride intermédiaire (16) étant par exemple constituée par une virole comportant un accélérateur (15) d'air centripète, caractérisé en ce qu'après avoir positionné ladite bride intermédiaire sur les axes, on met en place le disque aval comportant des alésages cylindriques que l'on vient fixer par des écrous (34) sur les secondes extrémités filetées (23).

## Patentansprüche

1. Verfahren zum Montieren wenigstens zweier Scheibe oder Scheibenflansche eines Turbomaschinenrotors mit Hilfe von über den Umfang der Scheibe bzw. des Scheibenflansches gleichmäßig verteilten, für eine Blindmontage an einem der Flansche geeigneten Befestigungsbolzen (18), die einen zentralen Abschnitt (19) mit länglichem Querschnitt haben, auf den an jedem Endbereich ein zylindrischer Teil (20, 21) folgt, dessen Durchmesser kleiner ist als die kleinste Querabmessung des zentralen Abschnitts (19), wobei die beiden glatten zylindrischen Teile jedes Befestigungsbolzens ihrerseits in zwei mit Gewinde versehenen Endbereichen (22, 23) enden, die jeweils eine Mutter (24, 26) zur Befestigung der zusammenzufügenden Scheiben oder Scheibenflansche aufnehmen können, während der zentrale Abschnitt (19) mit länglichem Querschnitt mit einer Bohrung (31) mit korrespondierendem länglichem Querschnitt eines der zusammenzufügenden Flansche zusammenwirkt, um die Winkelposition des Befestigungsbolzens vor dem Anziehen zu sichern, und wobei der erste mit Gewinde versehene Endbereich (22) des Befestigungsbolzens eine zylindrische Bohrung des ersten der zusammenzufügenden Flansche durchdringt, bis er axial an dem ersten Flansch der den ersten Endbereich (33) des zentralen Abschnitts des Befestigungsbolzens begrenzenden transversalen Fläche anliegt, um die axiale Positionierung des Befestigungsbolzens an dem ersten Flansch zu sichern, gekennzeichnet durch folgende Verfahrensschritte:

a) man führt den ersten mit Gewinde versehenen Endbereich (22) jedes Befestigungsbolzens (18) in eine kreisförmigen Bohrung des ersten der zusammenzufügenden Flansche, bis die transversale Fläche (33) des zentralen Abschnitts mit länglichem Querschnitt den Flansch berührt, und schraubt auf den ersten mit Gewinde versehenen Endbereich jedes Befestigungsbolzens eine Mutter (24) auf, ohne diese anzuziehen,

b) man bringt an dem mit allen seinen Befestigungsbolzen ausgestatteten Flansch ein Werkzeug (25) zur Winkelpositionierung der Befestigungsbolzen an, das aus einem Ring besteht, der Bohrungen (32) mit konjugiertem länglichem Querschnitt besitzt, wobei die genannten Abschnitte gegenüber der Symmetrieachse des Rings alle dieselbe radiale Orientierung haben, und zieht die Muttern (24) auf den ersten mit Gewinde versehenen Endbereichen an,

c) man bringt ein zweites Teil, eine Scheibe, einen Ring oder einen Scheibenflansch mit Bohrungen (31) mit länglichem Querschnitt an dem ersten Flansch zur Anlage.

2. Verfahren zum Montieren wenigstens zweier Scheiben oder Scheibenflansche nach Anspruch 1, dadurch gekennzeichnet, daß man auf dem zweiten mit Gewinde versehenen Endbereich (23) der Befestigungsbolzen Muttern (34) aufschraubt und diese anzieht.

3. Verfahren nach einem der Ansprüche 1 oder 2 zum Zusammenfügen von drei Flanschen, wobei der mittlere Flansch (16) beispielsweise von einem Ring mit einem zentripetalen Luftbeschleuniger (15) gebildet ist, dadurch gekennzeichnet, daß man nach dem Positionieren des mittleren Flansches auf den Befestigungsbolzen die stromabwärtige Scheibe anbringt, die zylindrische Bohrungen besitzt, und sie befestigt mit Muttern (34) auf den zweiten mit Gewinde versehenen Endbereichen (23).

## Claims

Procedure for the assembly of at least two rotor discs or rotor disc flanges for gas turbines by means of fixing rods regularly spaced apart around the circumference of the disc or the disc flange and capable of allowing their installation to be carried out "blind" in relation to one of the flanges, the said fixing rods (18) comprising a central portion (19) of oblong cross section extended at each end by a cylindrical part (20, 21) of smaller diameter than the smallest lateral dimension of the central oblong portion (19), the two smooth cylindrical parts of each rod being terminated by threaded ends (22, 23) each designed to accept a nut (24, 26 sic) [24, 34?] for the fixing of each of the discs or disc flanges to be assembled whilst the central oblong portion (19) mates with a hole (31) of corresponding oblong cross section in one of the flanges to be assembled so as to ensure the angular position of the rod before it is tightened up, and the first threaded end (22) of the rod passing through a round hole in the first flange to be assembled until the flat transversal surface at the limit of the first end (33) of the central oblong portion of the rod comes to bear axially against the first flange to ensure the axial positioning of the rod in relation to the first flange, characterised in that:

a) the first threaded end (22) of each rod (18) is put into a round hole in the first flange to be assembled until the transverse face (33) of the central oblong portion comes in contact with the flange and a nut (24) is loosely threaded onto the first threaded end of each rod;

b) to the flange fitted with all its rods is offered up a jig (25) which positions angularly these rods, the said jig being made up of a ring comprising holes (32) of matching oblong cross section, the said holes all having the same radial orientation in relation to the axis of symmetry of the ring, and the nuts (24) are then tightened on the first threaded ends;

c) a second component, disc, shell, or disc flange, with holes of the same oblong cross section (31) is placed to bear against the first flange.

2. Assembly procedure for at least two discs or disc flanges in accordance with Claim 1, characterised in that nuts (34) are screwed onto the second threaded end (23) of the fixing rods and are then tightened.

3. Procedure in accordance with Claims 1 or 2 for assembling three flanges, the intermediate flange (16) being, for example, constituted by a shell comprising a centripetal air accelerator (15) characterised in that after having positioned the said intermediate flange on the rods, the downstream disc which comprises round holes is placed on the rods and is then secured by nuts (34) on the threaded ends (23).

FIG : 1

EP 0 272 966 B1

FIG:3

FIG:3a

FIG:2

FIG:5

FIG:4

Vue suivant F